# EUROPÄISCHE PATENTSCHRIFT

(11) **EP 1 112 797 B1**
(45) Veröffentlichungstag und Bekanntmachung des Hinweises auf die Patenterteilung: **27.10.2004**
(21) Anmeldenummer: 00128080.9
(22) Anmeldetag: 21.12.2000
(51) Int. Cl.: B23D 61/02, B23D 61/12

(54) **Sägeblatt mit Grundkörper und ungeschränkten Zähnen**
Saw blade with body and unstaggered teeth arrangement
Lame de scie avec base et denture alignée

(30) Priorität: 28.12.1999 DE 19963396
(43) Veröffentlichungstag der Anmeldung: 04.07.2001
(73) Patentinhaber: WIKUS-Sägenfabrik Wilhelm H. Kullmann GmbH & Co. KG., 34286 Spangenberg (DE)
(72) Erfinder: Kullmann, Jörg H., Dr. techn., 34286 Spangenberg (DE); Fluhrer, Manfred, Dipl.-Ing., 34286 Spangenberg (DE)
(74) Vertreter: Patentanwälte Rehberg + Hüppe

(56) Entgegenhaltungen:
- EP-A- 0 610 647
- US-A- 5 832 803

## Beschreibung

Die Erfindung bezieht sich auf ein Sägeblatt mit einem Grundkörper und ungeschränkten, symmetrisch zu einer Längsmittelebene durch den Grundkörper ausgebildeten Zähnen mit Schneiden, die in sich wiederholenden Zyklen vorgesehen sind und jeder Zyklus mindestens eine aus mindestens zwei Zähnen mit einer Höhen- und einer Breitenstufung bestehende erste Zahngruppe und mindestens eine aus mindestens zwei Zähnen bestehende zweite Zahngruppe aufweist, wobei die Zähne der ersten Zahngruppe wirksame jeweils von einer abknickenden Schnittkante gebildete Schneiden bzw. Schneidenabschnitte aufweisen, und die Zähne der zweiten Zahngruppe identisch ausgebildet sind und die Zähne mit der größten Breite und geringsten Höhe darstellen. Die Erfindung kann sowohl bei einem Bandsägeblatt, also einem Sägeblatt mit linearer Anordnung der Zähne hintereinander, oder auch bei einem Bügelsägeblatt, oder auch bei einem Kreissägeblatt angewendet werden.

Ein Sägeblatt mit den im Oberbegriff des Anspruchs 1 angegebenen Merkmalen ist aus der DE 43 00 622 C2 bekannt. Es wird zwischen der Anzahl der Zähne pro Zahngruppe und der Anzahl der Zähne pro Zyklus unterschieden. Eine Gruppe von Zähnen liegt dann vor, wenn die Zähne hinsichtlich eines gemeinsamen Kriteriums, z. B. einer Höhen- und Breitenstufung, als zueinandergehörig betrachtet werden können. Ein Zyklus von Zähnen liegt dann vor, wenn die Zähne hinsichtlich aller Kriterien, z. B. Merkmale, als zueinandergehörig betrachtet werden können und sich die Folge der Zähne genau wiederholt. Die Anzahl der Zähne pro Zahngruppe kann gleich oder unterschiedlich zu der Anzahl der Zähne pro Zyklus sein. Die Zähne des Sägeblattes können mit konstanter oder variabler Teilung angeordnet sein. Die wirksamen Schneiden bzw. Schneidenabschnitte sämtlicher Zähne sind jeweils von einer abknickenden Schnittkante gebildet, deren innerer Abschnitt etwa senkrecht zur Längsmittelebene des Bandes verläuft und an den sich nach außen eine zum Grundkörper hin geneigte Phase anschließt, wobei der breiteste Zahn in der Gruppe zwischen Phase und Flanke einen Winkel größer 90° aufweist. Bei konstanter Teilung erbringt die Höhen- und Breitenstufung der Zähne in der Gruppe trotz der Ähnlichkeit in der Formgebung der Zähne bereits eine verminderte Empfindlichkeit gegen Schwingungen und einen hervorragenden Geradeauslauf des stabilisierten Bandes ohne die Gefahr des seitlichen Verlaufens.

Im Zyklus sind mindestens zwei Gruppen von Zähnen vorzugsweise regelmäßig ineinandergeschachtelt angeordnet. Die Zähne der zweiten Zahngruppe sind identisch ausgebildet und stellen die Zähne mit der größten Breite und geringsten Höhe dar. Damit sind im Zyklus der Zähne mindestens zwei unterscheidbare Gruppen von Zähnen ineinandergeschachtelt vorgesehen. Die gegenseitige "Überdeckung" der Gruppen ist dann besonder sinnvoll, wenn sie regelmäßig ist. Bei einer solchen regelmäßigen Ineinanderschachtelung kann beispielsweise eine erste Gruppe aus z.B. drei Zähnen vorgesehen sein, die eine solche Höhen- und Breitenstufung aufweist, daß von Zahn zu Zahn abnehmende Höhe und dabei zunehmende Breite auftritt. Diese erste Gruppe der drei Zähne dient im wesentlichen der Vertiefung des Schnittkanals. Als zweite Gruppe von Zähnen mögen drei Zähne vorgesehen sein, wobei der Zahn eine geringere Höhe als der dritte Zahn der ersten Gruppe und eine größere Breite als dieser aufweist. Die zweite Gruppe von Zähnen dient der Bearbeitung der Oberfläche des Schnittkanals. Die beiden Gruppen sind dann abwechselnd regelmäßig ineinandergeschachtelt, so daß sich eine entsprechende Zahnfolge im Zyklus ergibt, wobei hier der Einfachheit einmal zugrundegelegt werden soll, daß eine konstante Teilung Anwendung findet, so daß sich sechs Zähne im Zyklus aus den beiden ineinandergeschachtelten Gruppen ergeben. Diese Ineinanderschachtelung oder gegenseitige Überdeckung der Gruppen im Zyklus erbringt in Verbindung mit dem notwendigerweise vorhandenen Vorschub den besonderen Vorteil, daß die Zähne der ersten Gruppe vergleichsweise dickere Späne und die Zähne der zweiten Gruppe vergleichsweise dünnere Späne aus dem Schnittkanal ausräumen. Beim Ausräumen dickerer Späne wirkt sich ein Verschleiß an der wirksamen Schnittkante nicht so nachteilig aus wie bei extrem dünnen Spänen. Die vermehrte Anordnung der Zähne der zweiten Gruppe, die die größte Breite aufweisen, erbringt die verbesserte Oberfläche im Schnittkanal. Aber auch eine unregelmäßige Ineinanderschachtelung von fünf Zähnen 1, 2, 3, 4, 5 einer ersten Gruppe mit zwei Zähnen 6 einer zweiten Gruppe mit der Folge 1, 2, 3, 6, 4, 5, 6 im Zyklus ist möglich. Die Anzahl der Zähne in der ersten Gruppen sollte mindestens zwei betragen. Die Anzahl der Zähne in der zweiten Gruppe sollte mindestens zwei betragen. In der Regel stimmt die Anzahl der Zähne der ersten Gruppe mit der Anzahl der Zähne der zweiten Gruppe überein. Dabei ist es dann möglich, die Belastung der Zähne der ersten Gruppe untereinander gleich zu gestalten und ebenso die Belastung der Zähne der zweiten Gruppe untereinander, wobei jedoch die Belastung der Zähne der zweiten Gruppe unterschiedlich zu der Belastung der Zähne der ersten Gruppe ist. Dies darf nicht mit der Anwendung der bei Kreissägeblättern bekannten Vor- und Nachschneidertechnik verwechselt werden. Dort gibt es ohnehin nur zwei Arten von Zähnen, nämlich die Vorschneider und die Nachschneider.

Aus der DE-OS 36 11 063 ist ein Sägeblatt mit Zähnen bekannt, die in sich wiederholenden Zyklen vorgesehen sind. Jeder Zyklus bildet dabei zugleich eine Zahngruppe, so daß die Anzahl der Zähne pro Zyklus mit der Anzahl der Zähne pro Gruppe übereinstimmt. Die Zähne in der Gruppe bzw. im Zyklus werden hinsichtlich eines Führungszahnes, also dem ersten Zahn oder mehreren ersten Zähnen, in einem Zyklus oder einer Gruppe und hinsichtlich Folgezähnen unterschieden. Der oder die Führungszähne sind häufig als ungeschränkte Zähne ausgebildet, während die Folgezähne in aller Regel als geschränkte Zähne ausgebildet sind. Sämtliche Zähne besitzen in der Regel gleiche Breite. Der Führungszahn besitzt die größte Höhe, und die Zahnhöhe nimmt in der Gruppe ab. Manchmal ist der Führungszahn angephast, oder seine Schneide ist durch eine Spanbrechernut unterbrochen. Die als geschränkte Zähne ausgebildeten Folgezähne sind in der Regel abwechselnd nach links und rechts geschränkt vorgesehen, um auf diese Art und Weise die Breite des Schnittkanals größer zu gestalten als die Breite des Grundkörpers des Sägeblatts. Wenn zwei Führungszähne eingesetzt werden, können diese auch mit einem Höhenversatz ähnlich wie bei bekannten Vor- und Nachschneidern eines Kreissägeblattes gestaltet sein, wobei die wirksame Schnittkante dabei auf die zwei Führungszähne aufgeteilt wird. Durch die den Schnittkanal verbreiternden Folgezähne, die geschränkt ausgebildet sind, wird der Zyklus der Zähne vervollständigt. Die Höhenabnahme der Zähne erfolgt in der Regel stufenweise nacheinander, wobei aber auch Ausführungsbeispiele mit unterschiedlichen Zähnen hinsichtlich ihrer Höhe aufgezeigt werden, die jedoch unregelmäßig im Zyklus angeordnet sind. Bei einem der dargestellten Ausführungsbeispiele sind sieben Zähne vorgesehen, wobei der Führungszahn ungeschränkt ausgebildet ist und eine über die Breite des Grundkörpers durchgehende gerade Schnittkante besitzt. Diesem Führungszahn sind drei Paare von jeweils zwei Folgezähnen nachgeordnet, die sämtlich als geschränkte Zähne ausgebildet sind, wobei die Schränkung abwechselnd nach links und rechts erfolgt. Die beiden letzten Paare von Folgezähnen können identische Schrankbreite besitzen, und zwar in Verbindung mit gleicher oder ungleicher Höhe der Zähne, so daß diese vier letzten Folgezähne die Breite des Schnittkanals festlegen und jeweils abwechselnd die beiden Stirnflächen des Schnittkanals bearbeiten. Damit bearbeitet beispielsweise der 5. und der 7. Zahn der aus sieben Zähnen bestehenden Zahngruppe die eine Oberfläche des Schnittkanals. Der 7. Zahn führt bezüglich des 5. Zahns einen Nachbearbeitungsschritt aus, der dazu dient, den Verlauf des 5. Zahnes auszugleichen. Die bekannten Sägeblätter erfordern einen erheblichen Herstellungsaufwand.

Der Erfindung liegt die Aufgabe zugrunde, ein Sägeblatt der eingangs beschriebenen Art bereitzustellen, welches in Verbindung mit einer im Schnittkanal verbesserten Oberflächengüte eine preiswerte Herstellung erlaubt.

Erfindungsgemäß wird dies bei dem Sägeblatt der eingangs beschriebenen Art dadurch erreicht, dass die Zähne der zweiten Zahngruppe einerseits wirksame, jeweils von einer über die Breite durchgehenden Schnittkante gebildete Schneiden bzw. Schneidenabschnitte und andererseits zwischen Schnittkante und Flanke einen Winkel kleiner 90° aufweisen.

Die Erfindung geht von dem Gedanken aus, die Zähne der beiden Zahngruppen grundsätzlich unterschiedlich auszubilden und ineinanderzuschachteln. Die Zähne der ersten Zahngruppe sind gephast. Die Zähne der zweiten Zahngruppe sind ungephast, d.h. sie besitzen eine über die Breite durchgehende Schnittkante. Die Schnittkanten der gephasten Zähne erfordern zu ihrer Herstellung einen dreifachen Schleifvorgang. Die Schnittkanten der ungephasten Zähne können vorteilhaft, also preisgünstig, durch einen einzigen Schleifvorgang erstellt werden. Keine der geschliffenen Schnittkanten arbeitet über die gesamte geschliffene Breite, d.h. ein Großteil der Schleifarbeit wird ohne Nutzen durchgeführt. Vorteilhaft arbeiten die Zähne der zweiten Zahngruppe jedoch auch dann neben den Zähnen der ersten Zahngruppe, wenn die Zähne der zweiten Zahngruppe ungephast sind. Die Reihenfolge der Zähne der ersten Zahngruppe ist beliebig. Damit sind im Zyklus der Zähne mindestens zwei unterscheidbare Gruppen von Zähnen vorgesehen. Diese Zahngruppen sind jedoch nicht, wie üblich, hintereinander angeordnet, sondern ineinandergeschachtelt. Die gegenseitige "Überdeckung" der Gruppen ist dann besonders sinnvoll, wenn sie regelmäßig ist. Bei einer solchen regelmäßigen Ineinanderschachtelung kann beispielsweise eine erste Gruppe aus z.B. drei Zähnen vorgesehen sein, die eine von Zahn zu Zahn (in Bandlaufrichtung oder entgegen der Bandlaufrichtung) abnehmende Höhe und dabei zunehmende Breite aufweisen. Diese erste Gruppe der drei Zähne dient im wesentlichen der Vertiefung des Schnittkanals. Als zweite Gruppe von Zähnen mögen drei ungephaste Zähne übereinstimmender Gestalt vorgesehen sein, wobei der ungephaste Zahn eine geringere Höhe als der dritte Zahn der ersten Zahngruppe und eine größere Breite als dieser aufweist. Die zweite Gruppe von Zähnen dient der Bearbeitung der Oberfläche des Schnittkanals. Die beiden Gruppen sind dann abwechselnd regelmäßig ineinandergeschachtelt, so daß sich eine abwechselnde Zahnfolge im Zyklus ergibt, wobei hier der Einfachheit einmal zugrundegelegt werden soll, daß eine konstante Teilung Anwendung findet, so daß sich sechs Zähne im Zyklus aus den beiden ineinandergeschachtelten Gruppen ergeben. Diese Ineinanderschachtelung oder gegenseitige Überdeckung der Gruppen im Zyklus erbringt in Verbindung mit dem notwendigerweise vorhandenen Vorschub den besonderen Vorteil, daß die Zähne der ersten Gruppe vergleichsweise dickere Späne und die Zähne der zweiten Gruppe vergleichsweise dünnere Späne aus dem Schnittkanal ausräumen. Beim Ausräumen dickerer Späne wirkt sich ein Verschleiß an der wirksamen Schnittkante nicht so nachteilig aus wie bei extrem dünnen Spänen. Die vermehrte Anordnung der Zähne der zweiten Gruppe, die die größte Breite aufweisen, erbringt die verbesserte Oberfläche im Schnittkanal. Ihre vergleichsweise größere Anzahl wirkt auf einen geringeren Verschleiß und damit auf eine größere Standzeit des Sägebandes hin. Die Erfindung hebt sich damit deutlich von dem Fall ab, bei dem innerhalb eines Zyklusses aus einer Gruppe von Zähnen mit unterschiedlicher Breite der breiteste Zahn lediglich in Doppelanordnung hintereinander vorgesehen ist. Freilich kann auch bei der Ineinanderschachtelung eine Doppelanordnung der Zähne der zweiten Gruppe vorgesehen sein, also gleichsam eine erste Gruppe von Zähnen mit zwei zweiten Gruppen von Zähnen ineinandergeschachtelt sein. Aber auch eine unregelmäßige Ineinanderschachtelung von fünf Zähnen einer ersten Gruppe mit zwei Zähnen einer zweiten Gruppe macht von der erfindungsgemäßen Anordnung Gebrauch. Die Anzahl der Zähne in der ersten Zahngruppe sollte mindestens zwei betragen. Die Anzahl der Zähne in der zweiten Gruppe sollte mindestens zwei betragen. In der Regel stimmt die Anzahl der Zähne der ersten Gruppe mit der Anzahl der Zähne der zweiten Gruppe überein. Dabei ist es dann möglich, die Belastung der Zähne der ersten Gruppe untereinander gleich zu gestalten und ebenso die Belastung der Zähne der zweiten Gruppe untereinander, wobei jedoch die Belastung der Zähne der zweiten Gruppe unterschiedlich zu der Belastung der Zähne der ersten Gruppe sein kann. Die Erfindung darf nicht mit der Anwendung der bei Kreissägeblättern bekannten Vor- und Nachschneidertechnik verwechselt werden. Dort gibt es ohnehin nur zwei Arten von Zähnen, nämlich den Vorschneider und den Nachschneider, jedoch keine Zahngruppen. Insoweit kann dort auch allenfalls von einer Gruppe aus Vor- und Nachschneider gesprochen werden. Es fehlt die zweite Gruppe von Zähnen im Zyklus. Bei der Ineinanderschachtelung geht es um ungeschränkte Zähne in beiden Gruppen. Die Einstreuung von geschränkten Zähnen im Zyklus hebt die erfindungsgemäße Wirkung zwar nicht auf, führt jedoch zu keiner Verbesserung der Eigenschaften des Sägebandes.

Die einzelnen Zähne der ersten Zahngruppe sind nicht auf die Verwirklichung eines Führungszahnes und Folgezähnen hin gerichtet, sondern die einzelnen Zähne in der ersten Zahngruppe sind hinsichtlich der zu erbringenden Schnittarbeit als gleichwertig anzusehen, dergestalt, daß sämtliche Zähne der ersten Zahngruppe auch etwa in gleicher Weise belastet werden. Die Aufteilung der wirksamen Schnittkantenabschnitte auf die einzelnen Schneiden der Zähne der ersten Zahngruppe und ihre Anordnung auf relativ großem Abstand zueinander, nämlich um beispielsweise den Abstand mindestens zweier Teilungen, dient dem Ziel, möglichst Späne mit vergleichsweise vergrößerter Dicke auszuräumen.

Die Erfindung läßt sich auch in Verbindung mit der bekannten Vor- und Nachschneidertechnik anwenden. Ein besonders einfaches Beispiel ist eine Zahnfolge: Vorschneider, breitester Zahn der zweiten Zahngruppe, Nachschneider, breitester Zahn der zweiten Zahngruppe. Dabei ist nicht nur der Vorschneider, sondern auch der Nachschneider gephast, während die Zähne der zweiten Zahngruppe sämtlich ungephast sind.

Der breiteste Zahn im Zyklus, aus dessen wiederholter Anordnung die zweite Zahngruppe gebildet ist, weist zwischen Schnittkante und Flanke einen Winkel kleiner 90° auf. Dieser eingeschlossene Winkel sollte jedoch möglichst groß ausgebildet sein, um einer Verschleißanfälligkeit entgegenzuwirken. Es ist letztlich diese äußere Kante, die die Seitenwand des Schnittkanals bearbeitet und damit die verbesserte Oberflächengüte bestimmt. Da hier der Winkel zwischen Schnittkante und Flanke insbesondere nicht nennenswert kleiner als 90° ausgebildet ist, wirkt sich ein auch hier auftretender, unvermeidlicher Verschleiß an den Zähnen der zweiten Zahngruppe weniger nachteilig aus als bei ausgesprochen spitzwinkliger Gestaltung. Auch die vermehrte Anordnung der Zähne in der zweiten Gruppe wirkt vorteilhaft in dieser Richtung. Es ergeben sich längere Standzeiten und eine Oberflächengüte im Schnittkanal, die überrascht. Außerdem bewirkt die Geometrie der Ecken der Zähne der zweiten Gruppe eine höhere Stabilität gegen das Ausbrechen der Ecken, was vor allem bei der Verwendung von Hartschneidstoffen von besonderer Wichtigkeit ist.

Die Schneiden bzw. Schneidenabschnitte sämtlicher Zähne können sinnvoll so dimensioniert und aufeinander abgestimmt sein, daß deren wirksame Anteile ein etwa gleiches Spanvolumen aus dem Schnittkanal ausräumen. Damit werden nicht nur die Zähne pro Zahngruppe in etwa gleichmäßig belastet, sondern sämtliche Zähne des Sägebandes, d.h. jeder Zahn wird von einer in etwa gleich großen spezifischen Schnittkraft belastet. Die Späne der ersten Zahngruppe sind dicker als die von der zweiten Zahngruppe ausgeräumten Späne. Andererseits ist die spezifische Schnittkraft an den Zähnen der zweiten Zahngruppe vergleichsweise etwas geringer, weil nur die Späne der Zähne der ersten Zahngruppe infolge der Phasung zwei einander behindernde Materialflußrichtungen haben. Berücksichtigt man zusätzlich diese Einflüsse, so kann das Verhältnis der spezifischen Schnittkräfte der Zähne der ersten Zahngruppe zu den Zähnen der zweiten Zahngruppe von etwa 1 : 1 bis 1 : 1,2 betragen. Aufgrund der unterschiedlichen Spandicken wird im Mittelbereich des Schnittkanals grober gearbeitet als in den Randbereichen, innen wird also geschruppt, außen geschlichtet. Dies dient der erzeugbaren Oberflächengüte des Werkstücks.

Es ist aber auch möglich, daß die Schneiden bzw. Schneidenabschnitte sämtlicher Zähne so dimensioniert und aufeinander abgestimmt sind, daß deren wirksame Anteile Späne etwa gleicher Breite aus dem Schnittkanal ausräumen. Damit werden mehr gleichförmige Späne aus dem Schnittkanal ausgeräumt. Die eingeschachtelten oder eingeschobenen Zähne der zweiten Zahngruppe werden vergleichsweise weniger belastet und damit geschont. Der Verrundungsvorgang der äußeren Zahnspitzen der Zähne der zweiten Zahngruppe liegt länger in einem günstigen Bereich. Die Oberflächengüte des geschnittenen Werkstücks wird dadurch besser. Auch die Standzeit des Sägeblattes wird überraschenderweise verlängert. Weiter ist auch die Einhaltung der Toleranzen bei der Herstellung der Zähne einfacher beherrschbar. Das Verhältnis der spezifischen Schnittkräfte der Zähne der ersten Zahngruppe zu den Zähnen der zweiten zahngruppe kann hier in einem Bereich von etwa 1 : 1 bis zu 1 : 0,6 liegen.

Es ist aber auch möglich, die angegebenen Bereiche zu verlassen und bewußt außerhalb dieser Bereiche zu arbeiten. So kann es sinnvoll sein, die Zähne der zweiten Zahngruppe vergleichsweise noch mehr zu entlasten, sodaß das Verhältnis der spezifischen Schnittkräfte der Zähne der ersten Zahngruppe zu den Zähnen der zweiten Zahngruppe in einem Bereich bis zu etwa 1 : 0,2 liegen. Die Zähne der zweiten Zahngruppe erzeugen sehr schmale Späne. Die geringe Belastung äußert sich in einer nochmals verbesserten Oberflächengüte am Werkstück. In Verbindung damit können die Zähne der ersten Zahngruppe untereinander gleich oder auch unterschiedlich belastet sein. Gleich breite Späne der Zähne der ersten Zahngruppe ziehen gleiches Spanvolumen und damit gleiche spezifische Schnittkräfte nach sich. Unterschiedlich breite Späne der Zähne der ersten Zahngruppe ziehen ungleiches Spanvolumen und damit ungleiche spezifische Schnittkräfte nach sich. So kann der erste Zahn der ersten Zahngruppe so gestaltet sein, daß er einen schmaleren Span als die anderen Zähne der ersten Zahngruppe ausräumt. Duch die Keilwirkung des ersten Zahns ergibt sich eine Stabilisierung und somit eine Verbesserung des Geradlaufes des Sägebandes. Die anderen Zähne der ersten Zahngruppe werden vergleichsweise höher belastet und übernehmen die wesentliche Ausräumarbeit im Schnittkanal. Auch durch eine stellenweise oder durchgehende Verdopplung der Zähne der zweiten Zahngruppe in unmittelbarer Folge nacheinander erreicht man eine gezielte Entlastung dieser außen arbeitenden Zähne.

Besonders vorteilhaft ist es somit, wenn das Sägeblatt nur ungeschränkte Zähne aufweist und die wirksamen Schneiden bzw. Schneidenabschnitte sämtlicher Zähne der ersten Zahngruppe jeweils von einer abknickenden Schnittkante gebildet sind. Die wirksamen Schneiden bzw. Schneidenabschnitte der Zähne der zweiten Zahngruppe werden von einer durchgehenden wirksamen Schnittkante mit gerader Linie gebildet. So unterliegt jeder von dem wirksamen Teil einer Schnittkante der ersten Zahngruppe ausgeräumte verdickte Span beim Ausräumen einer in zwei unterschiedlichen Richtungen auf ihn einwirkenden Verformung, die somit einen spanbrechenden Effekt bewirkt. Dieser spanbrechende Effekt ist bei den Zähnen der zweiten Gruppe nicht vorhanden. Er ist dort auch nicht entscheidend, weil die zweite Gruppe von Zähnen ohnehin darauf abgestimmt ist, dünne Späne auszuräumen. Die Verwirklichung von Phasen an allen Zähnen der ersten Zahngruppen in symmetrischer Anordnung zur Längsmittelebene dient in besonderer Weise der Stabilisierung des Geradeauslaufs des Sägeblatts. Es wird hier eine stabilisierende Keilwirkung durch gleichmäßige Abstützung der Zähne beider Gruppen im Schnittkanal erreicht, dergestalt, daß es keinen Zahn gibt, auf den eine resultierende Seitenkraft ausgeübt wird. Durch die symmetrische Ausbildung der Phasen heben sich die beiden Seitenkräfte an jedem Zahn der ersten Zahngruppe gegeneinander auf. An den Zähnen der zweiten Zahngruppe entsteht keine Seitenkraft. Das Sägeblatt hat somit keine Neigung, seitlich zu verlaufen.

Die Zähne der im Zyklus mindestens zwei Zahngruppen sind vorzugsweise regelmäßig ineinandergeschachtelt angeordnet. Es können auch mehr als zwei Zahngruppen vorgesehen sein.

Es sei darauf hingewiesen, daß sich die Erfindung zunächst bei Anwendung einer konstanten Teilung im Zyklus verwirklichen läßt. Bereits dabei erbringt die Höhenstufung und die Breitenstufung der Zähne in der ersten Gruppe trotz der Ähnlichkeit in der Formgebung der Zähne eine verminderte Empfindlichkeit gegen Schwingungen und einen hervorragenden Geradeauslauf des stabilisierten Bandes. Von besonderer Bedeutung ist es jedoch, was die Erfindung ohne weiteres zuläßt, die beiden Gruppen von Zähnen auch in Kombination mit einer variablen Teilung einzusetzen. Durch die Anwendung einer variablen Teilung werden aus den Zähnen der ersten und der zweiten Gruppe mit ihrer Ineinanderschachtelung eine Art dritter Gruppen gebildet, die dann im Zyklus vermehrt auftauchen. Bei dem oben beschriebenen Beispiel aus drei Zähnen der ersten Zahngruppe und drei Zähnen der zweiten Zahngruppe und unter Anwendung von fünf unterschiedlichen Teilungen ergeben sich 30 Zähne im Zyklus. Die Ineinanderschachtelung der Zähne kehrt fünfmal wieder, entsprechend den fünf unterschiedlichen Teilungen.

In einer bevorzugten Ausführungsform kann zwischen je zwei Zähnen der ersten Gruppe ein Zahn der zweiten Gruppe eingeschoben sein. Es ist auch möglich, jeweils zwei Zähne der zweiten Gruppe hintereinander einzuschieben. Durch diese Maßnahme wird die "wirksame Teilung" zwischen den Zähnen der ersten Gruppe noch größer, also bei konstantem Vorschub die Späne noch dicker, während umgekehrt die Zähne der zweiten Gruppe noch feinere Späne an den Stirnflächen im Schnittkanal abnehmen.

Die Phasen an sämtlichen Zähnen der ersten Zahngruppe können in einem gleichen Phasenwinkel zu einer Geraden, senkrecht zu der Längsmittelebene des Grundkörpers angeordnet sein. Damit laufen die Phasen an den Zähnen der ersten Zahngruppe parallel zueinander, und zwar jeweils auf der linken und auf der rechten Seite des Zahns, bedingt durch die symmetrische Ausbildung zur Längsmittelebene durch den Grundkörper. Bei gleichmäßiger Höhenstufung der Zähne der ersten Zahngruppe ergibt sich in der Projektion ein gleichmäßiger Abstand von Phase zu Phase der Zähne der ersten Zahngruppe, wenn der Punkt, in welchem die Schnittkante abknickt, entsprechend gewählt wird. Betrachtet man die wirksamen Flächen- oder Volumenanteile, dann kann die Auslegung der Zähne der ersten Zahngruppe so getroffen werden, daß gleiche Flächen- oder Volumenanteile auf die Zähne verteilt werden. Es ist aber auch möglich, selbst bei Einhaltung gleicher Phasenwinkel in der Projektion unterschiedliche Abstände zwischen Phasen an den Zähnen der ersten Gruppe zu verwirklichen. Andererseits müssen die Phasenwinkel nicht unbedingt übereinstimmen. Auch die Anzahl der Knickpunkte in einem wirksamen, abknickenden Schnittkantenabschnitt kann größer als 1 sein. Die Gruppe der zweiten Zähne ist gleich gestaltet. Jeder Zahn der zweiten Gruppe weist gleiche Höhe, gleiche Breite und gleiche Ausbildung der durchgehenden Schnittkante auf. Die Zähne der zweiten Zahngruppe können außen auch abgerundet sein, um diese Zähne besonders unempfindlich gegen Verschleiß auszubilden und damit die Rauhigkeit der erzeugten Oberfläche im Schnittkanal nochmals zu verringern.

Zumindest die Zähne der zweiten Zahngruppe sollten eine größere Breite als der Grundkörper aufweisen, was jedoch nicht ausschließt, daß bereits die Zähne der ersten Zahngruppe zumindest teilweise breiter als der Grundkörper ausgebildet sind. Damit wird ein Freischnitt erreicht.

Die Flanken der Zähne der zweiten Zahngruppe können in einem Flankenwinkel im Bereich zwischen 3° und 12°, insbesondere 8°, angeordnet sein. Ein kleiner Flankenwinkel ergibt eine sehr stabile Ausbildung der freien Ecken der Zähne der zweiten Zahngruppe. Für die Ecken der Zähne der ersten Zahngruppe ist dies von untergeordneter Bedeutung, da diese Ecken ohnehin keine Schnittarbeit aufgrund vergleichsweise geringerer Breite erbringen. Es ist aber auch möglich, die Flanken sämtlicher Zähne beider Zahngruppen in einem übereinstimmenden Flankenwinkel mit sich deckender Projektion vorzusehen. Dies vereinfacht die Herstellung erheblich, indem die Flanken der Zähne aller Gruppen mit einer konstanten Maschineneinstellung, z. B. durch Schleifen, bearbeitet werden können.

Die Zähne beider Gruppen können als hartmetallbestückte, geschliffene Zähne ausgebildet sein. In Verbindung mit dem Phasenwinkel der Zähne der ersten Zahngruppe tritt dann auch eine Breitenstufung ein. Die Zähne beider Gruppen sind damit insgesamt großflächig ausgebildet und damit voll belastbar. In der Regel werden die Zähne der beiden Gruppen bzw. wesentliche Teile davon durch Hartmetallbestückung und durch Schleifen erstellt. Es versteht sich, daß der Bandstreifen des Grundkörpers zuvor durch einen Fräs-, Stanz- oder Schleifvorgang entsprechend vorbereitet wird. Es ist aber auch möglich, einen einseitig konisch erweiternd gewalzten Profilstab oder Bimetall-streifen als Material einzusetzen und die Zähne beider Gruppen durch einen Stanz-, Fräs- und/oder Schleifvorgang zu bilden.

Im sich wiederholenden Zyklus der Zähne aus den beiden Zahngruppen können Gruppen gebildet sein, die sich wiederholende variable Teilungen aufweisen. Dabei muß die Anzahl der Zähne in der Teilungsgruppe nicht unbedingt mit der Anzahl der Zähne der beiden Gruppen übereinstimmen. Bei einer Teilungsgruppe mit fünf unterschiedlichen Teilungen, einer ersten Zahngruppe aus drei Zähnen und einer zweiten Zahngruppe aus drei Zähnen beträgt die Anzahl der Zähne im Zyklus 30. Die Anzahl der Zähne im Zyklus ergibt sich als kleinstes gemeinsames Vielfaches der Teilungen mit der Anzahl der Zähne der beiden ineinandergeschachtelten Zahngruppen. Durch diese hohe Zahl der Zähne im Zyklus ist das Sägeblatt auch vergleichsweise unempfindlich gegenüber Schwingungsanregungen. Es besitzt eine große Laufruhe mit stabilisiertem Geradeauslauf, und die Standzeiten sind gegenüber herkömmlichen Sägeblättern überraschend verbessert. Die Anzahl der Zähne in der weiteren, durch die Folge der variablen Teilungen festgelegten Gruppe kann mit der Anzahl der Zähne aus den ersten beiden Gruppen nicht übereinstimmen; dann wird die Anzahl der Zähne im Zyklus besonders groß und das Sägeband bekommt eine große Laufruhe. Es ist aber auch möglich, daß die Anzahl der Zähne in der weiteren Gruppe - entsprechend der Anzahl der variablen Teilungen in der Folge - mit der Anzahl der Zähne im Zyklus übereinstimmt.

Die Erfindung wird anhand einiger Ausführungsbeispiele weiter erläutert und beschrieben. Es zeigen:
- Fig. 1: eine Seitenansicht auf einen Ausschnitt aus einem Sägeblatt in vergrößerter Darstellung,
- Fig. 2: eine Draufsicht auf das Sägeblatt gemäß Fig. 1,
- Fig. 3: eine Ansicht in Richtung der Linie III-III in Fig. 1 an einem Bandsägeblatt mit zwei Zähnen in der ersten Gruppe und zwei Zähnen in der zweiten Gruppe bei gleichem Spanvolumen,
- Fig. 4: eine ähnlich Darstellung wie Fig. 3, jedoch an einem anderen Ausführungsbeispiel eines Sägeblatts bei gleicher Spanbreite,
- Fig. 5: eine ähnliche Darstellung wie Fig. 4, jedoch an einem weiteren Ausführungsbeispiel eines Bandsägeblattes mit drei Zähnen in der ersten Gruppe und drei Zähnen in der zweiten Gruppe bei gleicher Spanbreite,
- Fig. 6: eine ähnliche Darstellung wie Fig. 4, jedoch an einem weiteren Ausführungsbeispiel eines Bandsägeblattes mit vier Zähnen in der ersten Gruppe und vier Zähnen in der zweiten Gruppe bei gleicher Spanbreite,
- Fig. 7: eine ähnlich Darstellung wie Fig. 3 oder 4, jedoch an einem anderen Ausführungsbeispiel eines Bandsägeblattes mit zwei Zähnen in der ersten Gruppe und zwei Zähnen in der zweiten Gruppe bei ungleicher Spanbreite der Zähne der beiden Gruppen, und
- Fig. 8: eine ähnlich Darstellung wie Fig. 3 oder 4, jedoch an einem anderen Ausführungsbeispiel eines Bandsägeblattes mit zwei Zähnen in der ersten Gruppe und zwei Zähnen in der zweiten Gruppe bei ungleicher Spanbreite der Zähne der ersten Gruppe.

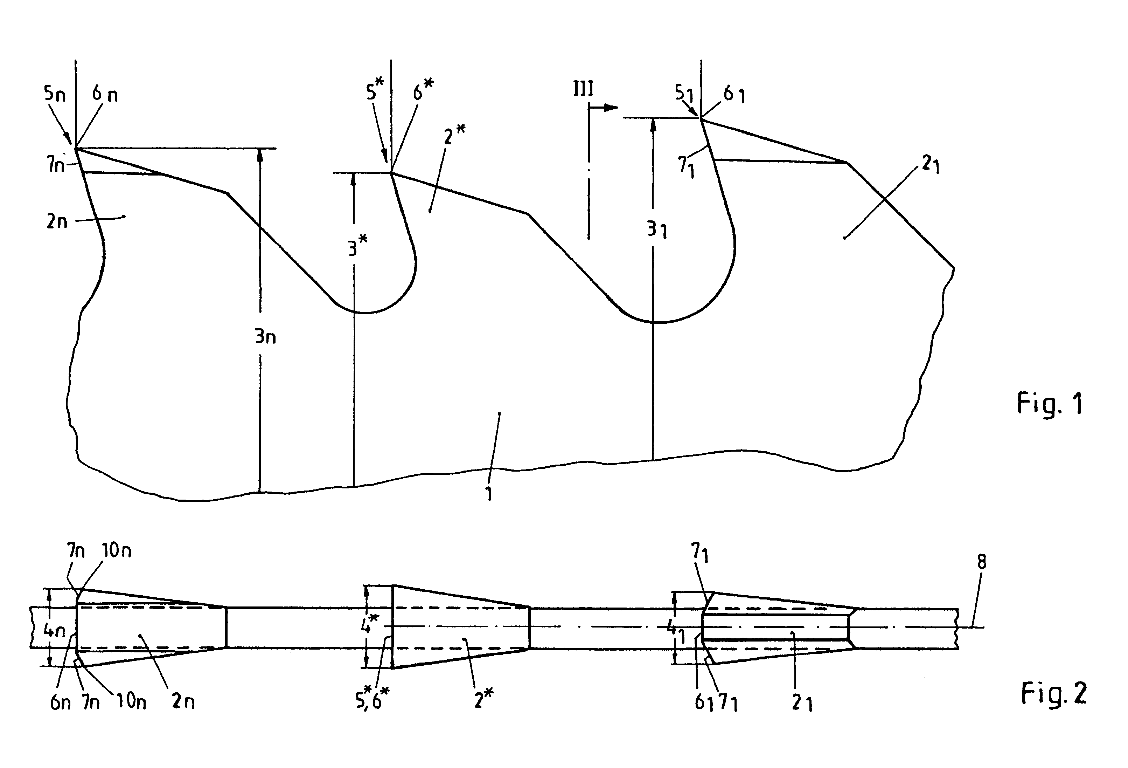

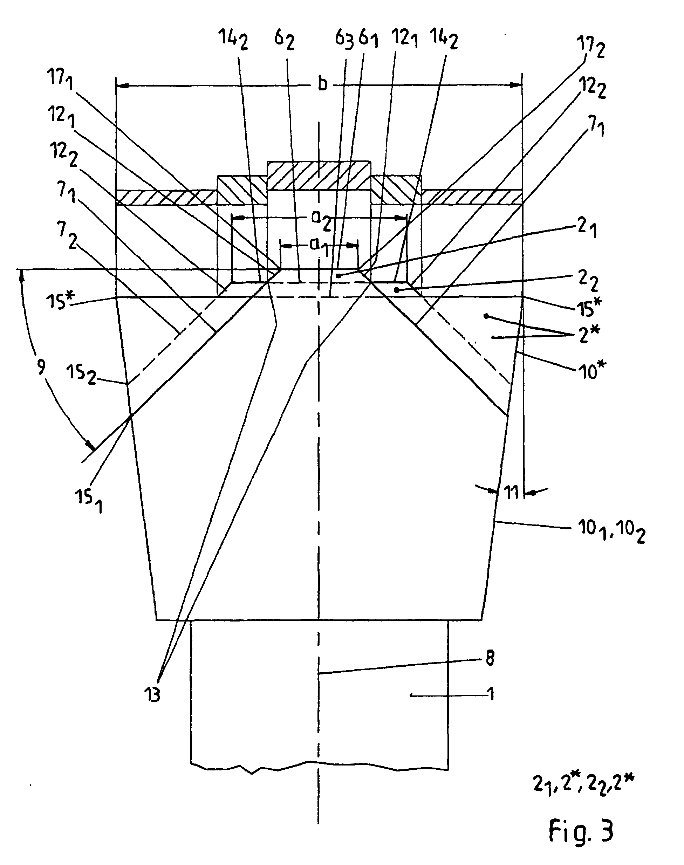

Das in Fig. 1 in einem Ausschnitt verdeutlichte Bandsägeblatt weist einen Grundkörper 1 mit ungeschränkten Zähnen 2, 2^{*} auf, die in sich wiederholenden Zyklen vorgesehen sind. Eine erste Gruppe von Zähnen 2 besteht aus hinsichtlich ihrer Höhe und Breite unterschiedlich gestalteten Zähnen. Der höchste Zahn 2₁ einer solchen Gruppe ist mit dem Index 1 gekennzeichnet, während der niedrigste Zahn einer solchen Gruppe mit dem Index n gekennzeichnet ist. Es ist eine zweite Gruppe von Zähnen 2^{*} vorgesehen, die sich in der Höhe und Breite nicht voneinander unterscheiden. Der Zahn 2^{*} ist niedriger als der niedrigste Zahn 2ₙ der ersten Gruppe. Der Zahn 2^{*} ist breiter als der breiteste Zahn 2ₙ der ersten Gruppe. Zur Vereinfachung sei zunächst einmal angenommen, daß die Anzahl der Zähne pro Zyklus sich aus der Summe der Anzahl der Zähne der ersten Gruppe und der Summe der Zähne der zweiten Gruppe ergibt, wie dies bei konstanter Teilung der Fall ist. Die Anzahl der Zähne in der ersten Gruppe beträgt mindestens zwei, kann aber auch mehr als zwei betragen. Die Anzahl der Zähne in der zweiten Gruppe beträgt mindestens zwei, ist jedoch vorzugsweise genauso groß wie die Anzahl der Zähne in der ersten Gruppe. Jeder Zahn 2, 2^{*} weist eine Höhe 3, 3^{*} auf, wobei auch hier wiederum die beschriebene Indexierung vorgenommen worden ist. Die Zähne 2 in der ersten Gruppe besitzen eine Höhenstufung in der Weise, daß die Höhe 3 von einem Zahn zu einem anderen Zahn der Zahngruppe abnimmt. Die Höhe 31 des ersten Zahnes 21 der ersten Gruppe ist somit größer als die Höhe des zweiten Zahnes 2₂ der ersten Gruppe, die Höhe des zweiten Zahnes 2₂ ist wiederum größer als die Höhe des dritten Zahnes 2₃ usw.. Der letzte Zahn 2ₙ der ersten Gruppe besitzt somit die geringste Höhe 3ₙ, die freilich immer noch höher als die Höhe 3^{*} der Zähne der zweiten Gruppe ist. Auf die Reihenfolge der Zähne der ersten Zahngruppe in Bandlaufrichtung kommt es nicht an, da diese Zähne ohnehin nur nebeneinander im Schnittkanal arbeiten. Die verschiedenen Variationsmöglichkeiten werden nachfolgend noch an Beispielen erläutert. Die Zähne 2 der ersten Zahngruppe weisen auch unterschiedliche Breiten 4 auf, wobei auch eine Breitenstufung in der Weise vorgesehen ist, daß der erste Zahn 2₁ der ersten Zahngruppe die geringste Breite, der letzte Zahn 2ₙ der ersten Zahngruppe die größte Breite der Zähne 2 innerhalb der ersten Zahngruppe aufweist. Der Zahn 2^{*} der zweiten Gruppe ist freilich noch breiter als der letzte Zahn 2ₙ der ersten Gruppe. Jeder Zahn 2 der ersten Zahngruppe besitzt eine abknickende Schnittkante 5, die von einem inneren Abschnitt 6 und je einer nach außen anschließenden Phase 7 gebildet wird. Die Abschnitte 6 verlaufen senkrecht quer zu einer Längsmittelebene 8 durch den Grundkörper 1. Die Ausbildung jedes Zahnes 2 ist symmetrisch zu der Längsmittelebene 8, so daß die Phasen 7 rechts und links an jedem Zahn 2 symmetrisch vorgesehen sind. Die Phasen 7 sind, wie insbesondere die Projektionen der Fig. 3 bis 6 zeigen, zu dem Grundkörper 1 hin geneigt angeordnet. Es ergibt sich für sämtliche Zähne 2 ein Phasenwinkel 9, der in einem Bereich zwischen 20 und 60° - vorzugsweise etwa 45° - vorgesehen sein sollte. Der Phasenwinkel 9 ist der Winkel zwischen einer Richtung senkrecht zu der Längsmittelebene 8 und der Phase 7. Die Phasen 7 sind nur an den Zähnen 2 der ersten Zahngruppe in der Weise angebracht, daß die Phase des ersten und höchsten Zahnes 2₁ nur einen vergleichsweise kleinen Abschnitt 61 aufweist, der eine geringere Länge besitzt als die Dicke des Grundkörpers 1. Die Zähne 2^{*} der zweiten Zahngruppe stimmen in ihrer geometrischen Gestalt und in ihrer Wirkungsweise überein. Sie sind bei konstanter Teilung in übereinstimmenden Abständen zueinander angeordnet. Sie sind vorzugsweise regelmäßig in bzw. zwischen den Zähnen 2 der ersten Zahngruppe eingeschachtelt vorgesehen. Die Zähne 2^{*} der zweiten Zahngruppe besitzen eine über die Breite gerade durchgehende Schnittkante, von der freilich nur die von der Projektion der Zähne 2 freigelassenen Anteile wirksam werden, also Späne aus dem Schnittkanal ausräumen. Die Zähne 2^{*} der zweiten Zahngruppe bestimmen allein die Oberflächengüte des geschnittenen Werkstücks.

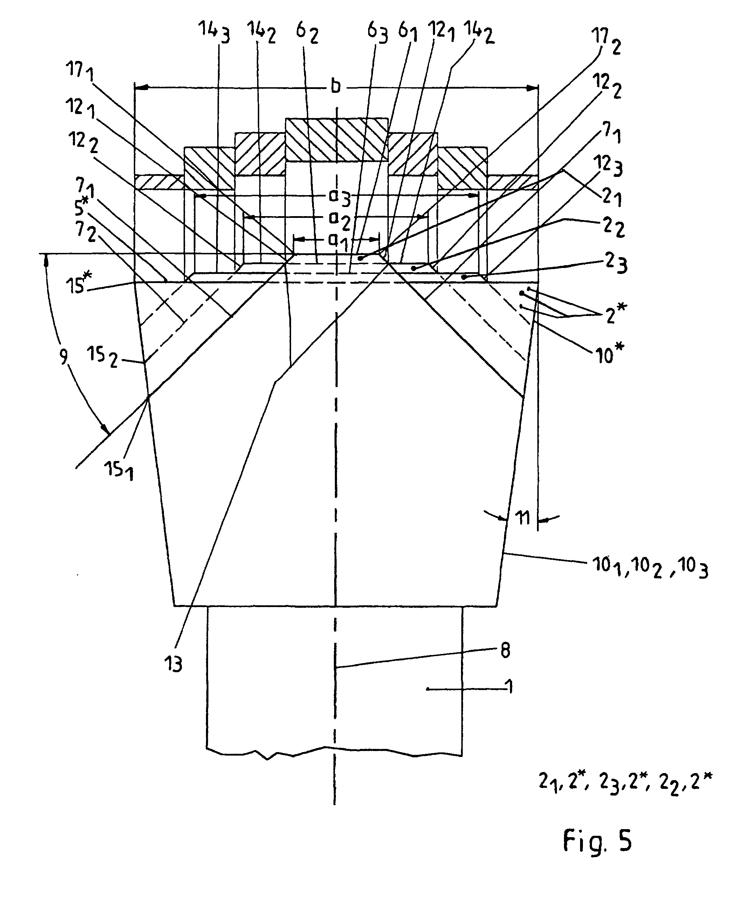

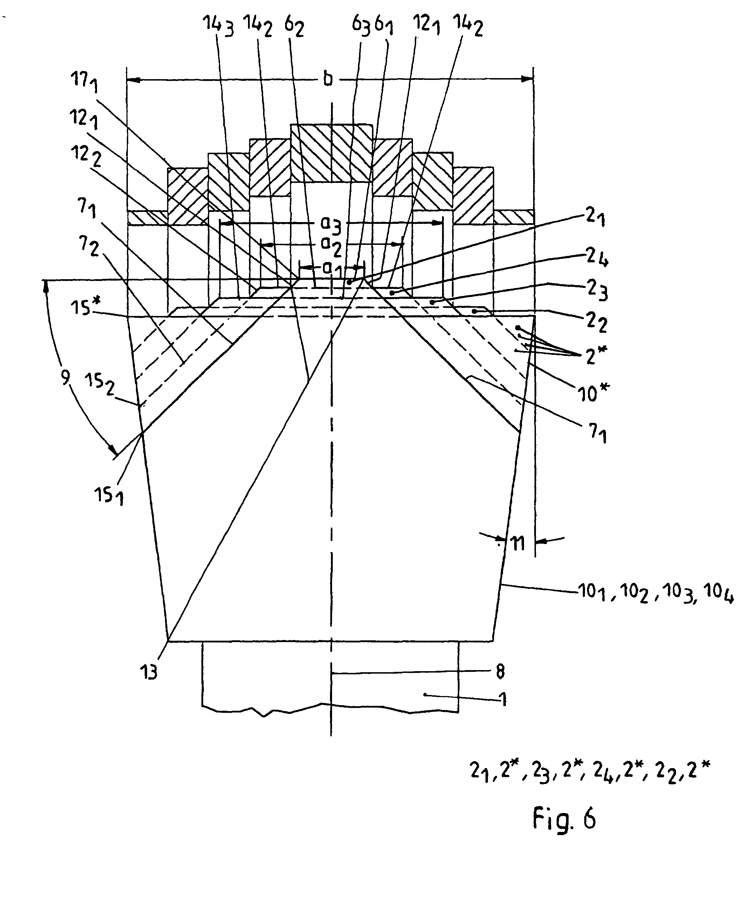

Die unterschiedliche Formgestaltung ist am einfachsten aus Fig. 3 ersichtlich, in der ein Ausführungsbeispiel mit zwei Zähnen 2 in der ersten Gruppe und zwei Zähnen 2^{*} in der zweiten Gruppe dargestellt ist. Die vier Zähne im Zyklus ergeben sich durch folgende Ineianderschachtelung der Zähne 2 der ersten Gruppe und der Zähne 2* der zweiten Gruppe: 2₁, 2*, 2₂, 2*. Bei nur zwei Zähnen in der ersten Zahngruppe und zwei regelmäßig eingeschachtelten Zähnen der zweiten Zahngruppe gibt es keine Variationsmöglichkeit der Anordnung der Zähne in Bandlaufrichtung, weil der Beginn eines Zyklusses oder einer Zahngruppe auf dem Sägeband frei wählbar ist. Bei mehr als zwei Zähnen in der ersten Zahngruppe ist dies anders, wie die Fig. 5 und 6 andeuten. Man erkennt an Fig. 3 zunächst den höchsten Zahn 2₁ der ersten Gruppe in Draufsicht mit seinem geraden relativ klein gestalteten Abschnitt 6₁, der hier die Länge a₁ aufweist. An diesen geraden Abschnitt 6₁ schließen sich am ersten Zahn 2₁ die relativ lang ausgebildeten Phasen 7₁ an, die in einem Phasenwinkel 9, hier 45°, vorgesehen sind. Die Phase 7₁ erstreckt sich bis zur Flanke 10₁ des Zahnes 2₁. Die Flanke 10 erweitert sich vom Grundkörper 1 in Richtung auf die Spitze jedes Zahnes 2, 2^{*}. Die Flanke 10 ist hier in einem Flankenwinkel 11 angeordnet, der an diesem Beispiel 8° beträgt. Der Flankenwinkel 11 ist nicht indexiert, da die Flanken 10 sämtlicher Zähne 2, 2^{*} beider Zahngruppen in der Projektion zusammenfallen, also sämtliche Flanken 10 im gleichen Flankenwinkel 11 vorgesehen sind. Die Ausbildung der Flanken 10 erfolgt durch einen Schleifvorgang über sämtliche Zähne 2, 2^{*} der beiden Zahngruppen hinweg. Der erste Zahn 2₁ der ersten Zahngruppe schneidet jedoch nur mit einem Teil seiner Schnittkante 5₁, und zwar mit dem Teil, der über den Umriß des zweiten Zahns 2₂ der ersten Gruppe, der erst hinter dem ersten Zahn 2^{*} der zweiten Gruppe angeordnet ist, in der Projektion vorsteht. Der wirksame, also schneidende Teil der Schnittkante 5₁ des ersten Zahnes 2₁ der ersten Gruppe besteht aus dem geraden Abschnitt 6₁ und dem sich anschließenden Abschnitt 12₁ nach beiden Seiten. Die Abschnitte 12₁ enden in dem Projektionsschnittpunkt 13.

Auf den höchsten Zahn 2₁ der ersten Zahngruppe folgt ein erster Zahn 2^{*} der zweiten Zahngruppe. Dieser Zahn 2^{*} besitzt eine geringere Höhe als die Zähne 2₁ und 2₂ der ersten Zahngruppe, jedoch eine größere Breite als diese.

Als dritter Zahn im Zyklus schließt sich der zweithöchste Zahn 2₂ der ersten Gruppe an. Er weist einen geraden Abschnitt 6₂ der Länge a₂ auf, an den sich wiederum Phasen 7₂ nach beiden Seiten in symmetrischer Weise anschließen. Der Verlauf sämtlicher Phasen 7 an allen Zähnen 2 der ersten Gruppe ist parallel zueinander. Auch von dem Zahn 2₂ schneidet nur ein gewisser Teil, nämlich der Teil der Schnittkante 5₂, der die Umrisse der anderen Zähne überragt. Dies sind die beiden senkrecht zur Längsmittelebene verlaufenden Schneidenabschnitte 14₂ des Abschnittes 6₂ und die beiden jeweils anschließenden Abschnitte 12₂ der Phasen 7₂. Verlängert man die Flanken 10 in Richtung auf eine Linie, die die Verlängerung des Abschnittes 6₁ darstellt, dann ergibt sich hier eine theoretische Breite b der Zähne 2, 2^{*}.

Man erkennt aus Fig. 3, daß nur die beiden äußeren Ecken 15^{*} der Zähne 2^{*} der zweiten Gruppe schneiden, während die Ecken 15₁ und 15₂ der Zähne 2 der ersten Gruppe sich innerhalb des Schnittkanals bewegen und an einem Materialabtrag nicht beteiligt sind. Für die Standzeit und den unvermeidlichen Verschleiß an den Ecken 15^{*} ist es wesentlich, zu erkennen, daß der Winkel zwischen der Schnittkante 5^{*} und der Flanke 10^{*} zwar spitzwinklig, aber möglichst groß ausgebildet ist, also nicht nennenswert kleiner als 90°.

Man erkennt an Fig. 3 auch eine gleichmäßige Höhenstufung, die über die Zähne 2 der ersten Gruppe und die Zähne 2^{*} der zweiten Gruppe hinweggeht. Die Breitenstufung ist dagegen nicht gleichmäßig. Die Höhen- und Breitenstufung in Verbindung mit dem Phasenwinkel 9 ist nun so gewählt, daß von jedem Zahn 2, 2^{*} der beiden Zahngruppen streifenförmige Partien (Späne) aus dem im Werkstück sich bildenden Schnittkanal ausgeräumt werden, wobei das Volumen der Streifen bzw. Späne pro Zahn 2, 2^{*} in etwa übereinstimmt, jedoch die Dicke der Streifen entsprechend unterschiedlich bemessen ist. Die Zähne der beiden Zahngruppen sind somit gleichmäßig belastet. Die Zähne der zweiten Zahngruppe räumen Späne aus dem Schnittkanal aus, die nur etwa halb so dick wie die Späne sind, die von den Zähnen der ersten Zahngruppe ausgeräumt werden. Die Höhe der Streifen stimmt mit der Höhe an den Zähnen 2₁ und 2₂ unter Berücksichtigung des Vorschubes überein; es wird - wie ersichtlich - ein relativ dicker Span von den Zähnen der ersten Zahngruppe ausgeräumt. Die Höhen der streifenförmigen Partien der Zähne 2^{*} sind dagegen entsprechend dünner. Man erkennt, daß im gleichen Zeitintervall, in welchem je ein Streifen der Zähne 2 der ersten Zahngruppe ausgeräumt wird, zwei kleinere Streifen durch die Zähne 2^{*} ausgeräumt werden. Jeder einzelne Span, der mit einem Zahn 2 der ersten Zahngruppe ausgeräumt wird, wird im Bereich des Abknickpunktes 17 der Schnittkante zwischen dem geraden Abschnitt 6 und dem wirksamen Teil der Phase 7 gleichsam nach zwei Richtungen gebogen, die unterschiedlich sind. Dies trägt dazu bei, den einzelnen Span gleichsam noch einmal aufzuspalten bzw. während der Abnahme in Teile zu zerlegen.

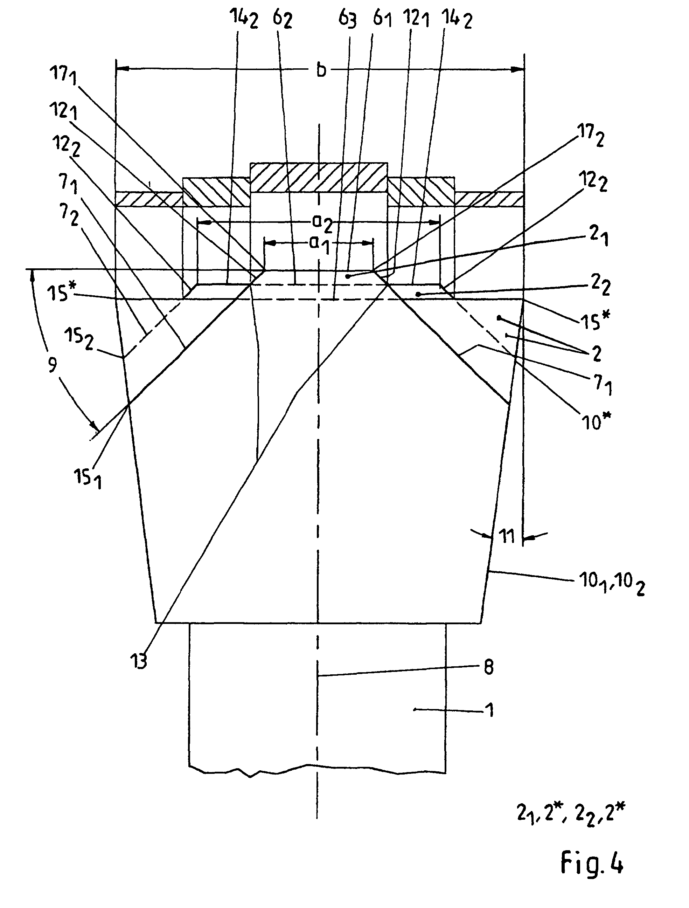

Das Ausführungsbeispiel der Fig. 4 ist an sich ähnlich gestaltet wie das der Fig. 3. Es ist jedoch nicht auf eine gleichmäßige Belastung aller Zähne abgestimmt, sondern auf gleiche Spanbreite, um dadurch die Zähne der zweiten Zahngruppe vergleichsweise zu entlasten und dadurch die Oberflächengüte des geschnittenen Werkstücks und die Standzeit des Sägebandes insgesamt zu erhöhen. Ansonsten wird auf die Beschreibung des Ausführungsbeispieles der Fig. 3 verwiesen.

Der Phasenwinkel 9 kann bei allen Ausführungsformen 30° betragen. Eine andere Bemessung, z.B. 45°, ist auch möglich. Die Phasenwinkel an den verschiedenen Zähnen der ersten Zahngruppe stimmen in der Regel überein. Die geraden Abschnitte der abknickenden Schnittkanten können auch leicht schräg zur Längsmittelebene angeordnet sein. Auch dabei wird die symmetrische Ausbildung beibehalten.

Bei dem Ausführungsbeispiel der Fig. 5 sind drei Zähne 2 in der ersten Gruppe vorgesehen, zwischen denen jeweils ein Zahn 2^{*} der zweiten Gruppe angeordnet ist. Es sei weiterhin angenommen, daß eine konstante Teilung Anwendung findet, so daß die Zähnezahl im Zyklus 6 beträgt. Die Höhenstufung und die Breitenstufung ist gleichmäßig über die Zähne beider Zahngruppen durchgeführt. Wenn, wie hier, die erste Zahngruppe aus drei Zähnen 2 besteht, gibt es zwei Variationsmöglichkeiten der Anordnung auf dem Sägeband. Die erste Möglichkeit ist 2₁, 2^{*}, 2₂, 2^{*}, 2₃, 2^{*}. Die zweite, dargestellte Möglichkeit ist 2₁, 2*, 2₃, 2*, 2₂, 2*. In Fig. 5 ist die Abstimmung auf Zähne gleicher wirksamen Spanbreite dargestellt. Es ist vorstellbar, daß auch eine Gestaltung auf gleichmäßige Belastung, also gleiches Spanvolumen, möglich ist, wie dies anhand von Fig. 3 verdeutlicht ist.

Es ist auch möglich, die Zähne 2* der zweiten Zahngruppe an einer oder mehreren oder allen Stellen im Zyklus zu verdoppeln. Es entstehen dann beispielsweise folgende Zahnfolgen
2₁, 2*, 2₂, 2*, 2*, 2₃, 2* oder
2₁, 2^{*}, 2₃, 2^{*}, 2₂, 2^{*}, 2^{*} oder
2₁, 2^{*}, 2^{*}, 2₃, 2^{*}, 2^{*}, 2₂, 2^{*}, 2^{*} usw.

Bei dem Ausführungsbeispiel der Fig. 6 sind vier Zähne 2 in der ersten Gruppe vorgesehen, zwischen denen jeweils ein Zahn 2^{*} der zweiten Gruppe angeordnet ist. Es sei weiterhin angenommen, daß eine konstante Teilung Anwendung findet, so daß die Zähnezahl im Zyklus 8 beträgt. Die Höhenstufung und die Breitenstufung ist gleichmäßig über die Zähne beider Zahngruppen durchgeführt. Wenn, wie hier, die erste Zahngruppe aus vier Zähnen 2 besteht, gibt es sechs variationsmöglichkeiten der Anordnung auf dem Sägeband, nämlich
2₁, 2*, 2₂, 2*, 2₃, 2*, 2₄, 2*
2₁, 2*, 2₂, 2*, 2₄, 2*, 2₃, 2*
2₁, 2*, 2₃, 2*, 22, 2*, 2₄, 2*
2₁, 2*, 2₃, 2*, 2₄, 2*, 2₂, 2* (in Fig. 6 dargestellt)
2₁, 2*, 2₄, 2*, 2₂, 2*, 23, 2*
2₁, 2*, 2₄, 2*, 2₃, 2*, 2₂, 2*.

All dies gilt unter Berücksichtigung, daß es an sich gleichgültig ist, an welcher Stelle auf dem Sägeband man eine Gruppe oder einen Zyklus beginnen läßt. Bei der ersten Anordnungsmöglichkeit ist eine Höhenstufung der Zähne der ersten Zahngruppe mit stetiger Abnahme der Höhe in Bandlaufrichtung gegeben. Bei der sechsten Möglichkeit ist eine Höhenstufung der Zähne der ersten Zahngruppe mit stetiger Zunahme der Höhe in Bandlaufrichtung bzw. Abnahme der Höhe entgegen der Bandlaufrichtung vorgesehen. In Fig. 6 ist die Abstimmung auf Zähne gleicher wirksamen Spanbreite dargestellt. Es ist vorstellbar, daß auch eine Gestaltung auf gleichmäßige Belastung, also gleiches Spanvolumen, möglich ist, wie dies anhand von Fig. 3 verdeutlicht ist.

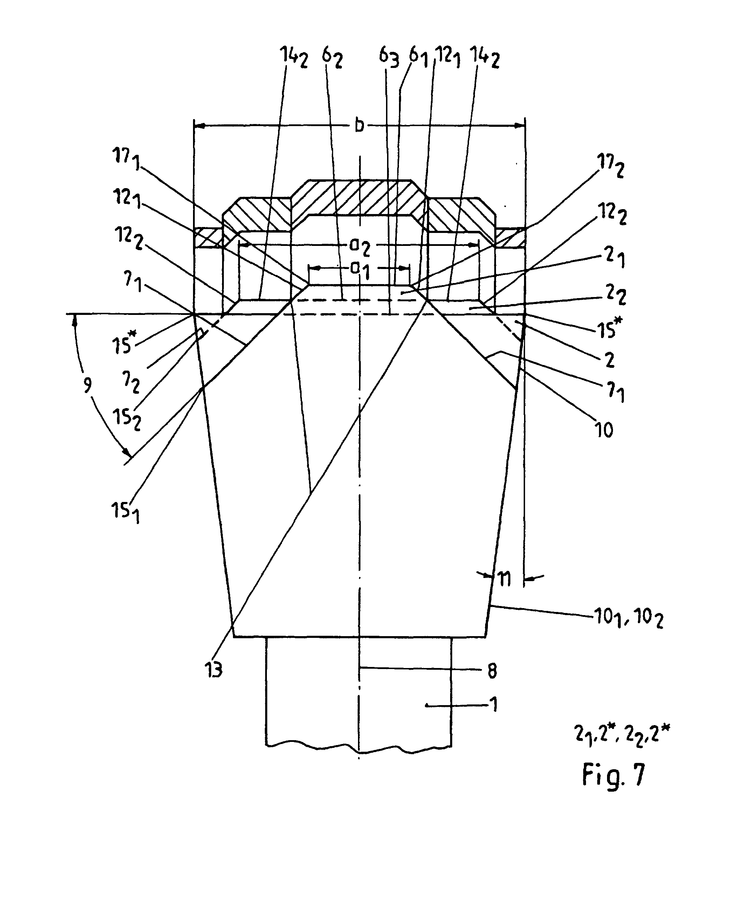

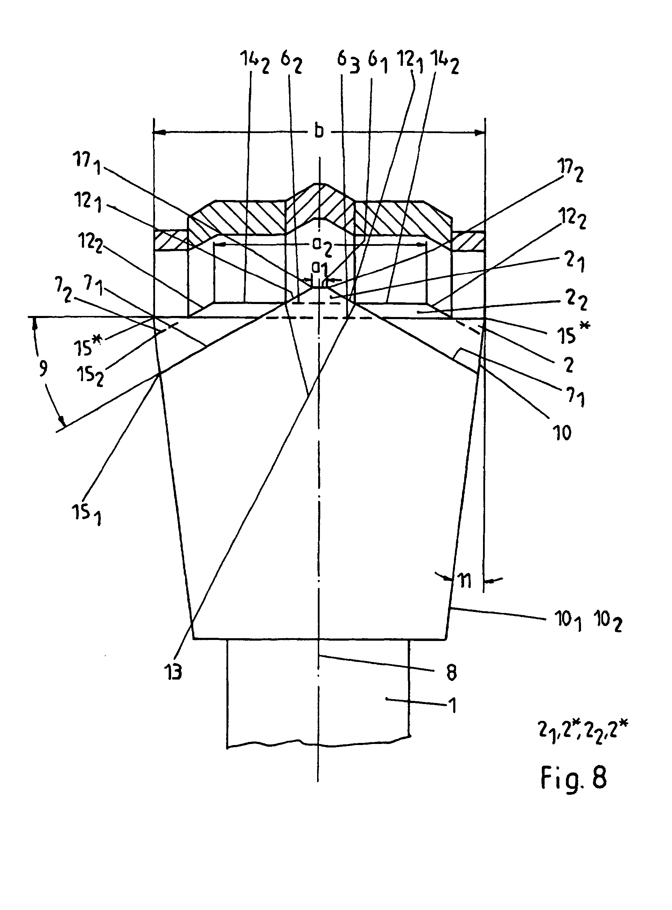

Aber auch andere Gestaltungsstrategien der Zähne der ersten Zahngruppe und der Zähne der zweiten Zahngruppe sowohl zueinander wie auch innerhalb jeder Zahngruppe sind möglich. Zwei solche Möglichkeiten sind in den Fig. 7 und 8 angedeutet, wobei sich diese Möglichkeiten wiederum auf die Darstellung von nur vier Zähnen in der zahngruppe beschränken, wie dies in den Fig. 3 und 4 verdeutlicht ist. Entsprechende Erweiterungen auf mehr als vier Zähne in der Zahngruppe sind durch Kombination der aus den Fig. 5 und 6 erkennbaren Strategien sichtbar.

Wegen der allgemeinen Beschreibung der Fig. 7 und 8 kann auf die vorangehenden Ausführungsbeispiele hingewiesen werden. Es sind die gleichen Bezugszeichen wie bei der Darstellung der Fig. 3 und 4 verwendet. In Abweichung zu den Darstellungen der Fig. 3 und 4 ist bei den Fig. 7 und 8 das ausgeräumte Spanvolumen nicht in Rechteckdarstellung (wie bei den Fig. 3 bis 6), sondern etwas mehr in Übereinstimmung mit der Praxis als entsprechend der Phasung der Zähne der ersten Zahngruppe abknickendes Spanvolumen dargestellt. Aus dieser Abknickung sind auch die beiden Materialflußrichtungen der entsprechenden Materialelemente eines Spanes eines Zahnes der ersten Zahngruppe erkennbar.

Fig. 7 zeigt ein Ausführungsbeispiel, bei dem die Zähne der ersten Zahngruppe zwar untereinander gleich, aber ungleich höher belastet sind als die Zähne 2^{*} der zweiten Zahngruppe. Das Verhältnis der Schnittkräfte an den Zähnen der ersten Zahngruppe zu den Schnittkräften an den Zähnen der zweiten Zahngruppe kann im Bereich von etwa 1 : 0,2 liegen. Die eingeschobenen Zähne 2^{*} der zweiten zahngruppe sind also einerseits sehr gering belastet und räumen andererseits einen sehr schmalen Span aus dem Schnittkanal aus. Dies zielt darauf ab, die wesentliche Ausräumarbeit durch die Zähne der ersten Zahngruppe bereitzustellen und die Zähne der zweiten Zahngruppe im Hinblick auf eine hohe Oberflächengüte an geschnittenen Werkstück auszubilden. Durch die geringere Belastung der Zähne 2^{*} der zweiten Zahngruppe findet der Verrundungsprozeß der außenliegenden Ecken der Zähne 2^{*} langsamer statt, d. h. bei einem Langzeitgebrauch des Sägebandes liegt der Verschleiß länger in einem für hohe Oberflächengüte günstigen Bereich. Erstaunlicherweise erhöht sich zugleich die Standzeit des Sägebandes.

Das Ausführungsbeispiel der Fig. 8 bezieht sich wiederum auf die geringstmögliche Zähnezahl im Zyklus. Die Zähne der ersten Zahngruppe sind insofern untereinander unterschiedlich gestaltet, daß sie keine übereinstimmende Breite und somit auch kein übereinstimmendes Spanvolumen und so auch untereinander keine gleichmäßige Belastung aufweisen. Der erste Zahn 2₁ der ersten Zahngruppe ist im wesentlichen auf die Erbringung einer Keilwirkung gestaltet. Dieser erbringt eine Stabilisierung des Geradlaufes des Sägebandes. Der zweite oder folgende Zahn der ersten Zahngruppe übernimmt die wesentliche Ausräumarbeit. Die Zähne der zweiten Zahngruppe räumen vergleichsweise schmalere und infolge ihrer häufigeren Anordnung im Zyklus natürlich auch dünnere Späne aus dem Schnittkanal aus. Da sie keine Phasung besitzen, gibt es auch nur eine Materialflußrichtung, so daß die Belastung der Zähne der zweiten Zahngruppe bewußt niedrig gewählt ist, um eine lange Standzeit des Sägebandes und eine hohe Oberflächengüte des geschnittenen Werkstückes zu erreichen. Das Verhältnis der spezifischen Schnittkräfte des ersten Zahns der ersten Zahngruppe zum zweiten Zahn der ersten Zahngruppe und zu den Zähnen der zweiten Zahngruppe kann etwa in der Größenordnung 1,0 : 2,0 : 0,5 liegen, also beispielsweise 40 kg : 80 kg : 20 kg betragen.

Die Ausführungsbeispiele sind mit konstanter Teilung dargestellt. Es ist leicht vorstellbar, daß auch eine variable Teilung angewendet werden kann. Dann stimmt die Anzahl der Zähne der beiden Gruppen in der Regel mit der Anzahl der Zähne im Zyklus nicht mehr überein. Die Höhenstufung kann auch ungleichmäßig ausgeführt werden. Auch die Einschachtelung zusätzlicher Zähne ist möglich, beispielsweise eine Doppelanordnung der Zähne 2*.

### BEZUGSZEICHENLISTE

- 1 -: Grundkörper
- 2 -: Zähne
- 3 -: Höhe
- 4 -: Breite
- 5 -: Schnittkante
- 6 -: Abschnitt
- 7 -: Phase
- 8 -: Längsmittelebene
- 9 -: Phasenwinkel
- 10 -: Flanke
- 11 -: Flankenwinkel
- 12 -: Abschnitt
- 13 -: Projektionsschnittpunkt
- 14 -: Schneidenabschnitt
- 15 -: Ecke

## Patentansprüche

1. Sägeblatt mit einem Grundkörper (1) und ungeschränkten, symmetrisch zu einer Längsmittelebene (8) durch den Grundkörper ausgebildeten Zähnen mit Schneiden, die in sich wiederholenden Zyklen vorgesehen sind und jeder Zyklus mindestens eine aus mindestens zwei Zähnen (2) mit einer Höhen- und einer Breitenstufung bestehende erste Zahngruppe und mindestens eine aus mindestens zwei Zähnen (2^{*}) bestehende zweite Zahngruppe aufweist, wobei die Zähne (2) der ersten Zahngruppe wirksame jeweils von einer abknickenden Schnittkante (5₁, 5₂, usw.) gebildete Schneiden bzw. Schneidenabschnitte aufweisen, und die Zähne (2*) der zweiten Zahngruppe untereinander identisch ausgebildet sind und die Zähne mit der größten Breite und geringsten Höhe darstellen, **dadurch gekennzeichnet, dass** die Zähne (2*) der zweiten Zahngruppe einerseits wirksame, jeweils von einer über die Breite durchgehenden Schnittkante (5*, 5*, usw.) gebildete Schneiden bzw. Schneidenabschnitte und andererseits zwischen Schnittkante (5*) und Flanke (10*) einen Winkel kleiner 90° aufweisen.

2. Sägeblatt nach Anspruch 1, **dadurch gekennzeichnet, dass** die Schneiden bzw. Schneidenabschnitte sämtlicher Zähne (2, 2^{*}) so dimensioniert und aufeinander abgestimmt sind, dass deren wirksame Anteile ein etwa gleiches Spanvolumen aus dem Schnittkanal ausräumen.

3. Sägeblatt nach Anspruch 1, **dadurch gekennzeichnet, dass** die Schneiden bzw. Schneidenabschnitte sämtlicher Zähne (2, 2^{*}) so dimensioniert und aufeinander abgestimmt sind, dass deren wirksame Anteile Späne etwa gleicher Breite aus dem Schnittkanal ausräumen.

4. Sägeblatt nach Anspruch 1, **dadurch gekennzeichnet, dass** das Sägeblatt nur ungeschränkte Zähne (2, 2*) aufweist.

5. Sägeblatt nach Anspruch 1, **dadurch gekennzeichnet, dass** die Zähne (2, 2*) der im Zyklus mindestens zwei Zahngruppen vorzugsweise regelmäßig ineinandergeschachtelt angeordnet sind.

6. Sägeblatt nach einem der Ansprüche 1 bis 5, **dadurch gekennzeichnet, dass** zwischen je zwei Zähnen (2₁, 2₂, usw) der ersten Zahngruppe mindestens ein Zahn (2*) der zweiten Zahngruppe eingeschoben ist.

7. Sägeblatt nach einem der Ansprüche 1 bis 6, **dadurch gekennzeichnet, dass** die Phasen (7) an sämtlichen Zähnen (2) der ersten Zahngruppe in einem gleichen Phasenwinkel (9) zu einer Geraden, senkrecht zu der Längsmittelebene (8) des Grundkörpers (1) angeordnet sind.

8. Sägeblatt nach einem der Ansprüche 1 bis 7, **dadurch gekennzeichnet, dass** zumindest die Zähne (2*) der zweiten Zahngruppe eine größere Breite als der Grundkörper (1) aufweisen.

9. Sägeblatt nach einem der Ansprüche 1 bis 8, **dadurch gekennzeichnet, dass** die Flanken (10*) der Zähne (2*) der zweiten Zahngruppe in einem Flankenwinkel (11) im Bereich zwischen 3° und 12°, insbesondere 8°, angeordnet sind.

10. Sägeblatt nach einem der Ansprüche 1 bis 9, **dadurch gekennzeichnet, dass** die Zähne (2, 2*) beider Zahngruppen als hartmetallbestückte, geschliffene Zähne ausgebildet sind.

11. Sägeblatt nach einem der Ansprüche 1 bis 10, **dadurch gekennzeichnet, dass** im sich wiederholenden Zyklus der Zähne (2, 2*) aus den beiden Zahngruppen weitere Zahngruppen gebildet sind, die sich wiederholende, variable Teilungen aufweisen.

12. Sägeblatt nach Anspruch 11, **dadurch gekennzeichnet, dass** die Anzahl der Zähne in der weiteren, durch die Folge der variablen Teilungen festgelegten Zahngruppe mit der Anzahl der Zähne aus den ersten beiden Zahngruppen nicht übereinstimmt.

## Claims

1. Saw blade, comprising a body (1) and a plurality of spaced apart unset teeth having cutting portions and being formed approximately symmetrically along a longitudinal centre plane (8) in recurring cycles of teeth, each recurring cycle of teeth including at least one first group of at least two teeth (2) having a grading with respect to the height and the width and at least one second group of at least two teeth (2*), the at least two first teeth (2) each including at least one effective cutting portion being formed by a cutting edge (5₁, 5₂, etc.) having phases, and the teeth (2*) of the second teeth being identical and being the teeth having the greatest width and the smallest height, **characterized in that** the teeth (2*) of the second group include effective cutting portions being formed by a cutting edge (5*, 5*, etc.) being designed to be continuous and straight along its width and have an angle less than 90° between the cutting edge (5*) and the flank (10*).

2. Saw blade of claim 1, **characterized in that** the cutting portions of all of the teeth (2, 2*) are designed and arranged to cut approximately the same chip volume from a cutting channel of a work piece to be cut.

3. Saw blade of claim 1, **characterized in that** the cutting portions of all of the teeth (2, 2*) are designed and arranged to cut chips having approximately the same width from a cutting channel of a work piece to be cut.

4. Saw blade of claim 1, **characterized in that** all of the first and second teeth (2, 2*) are unset.

5. Saw blade of claim 1, **characterized in that** the teeth (2, 2*) of the first and second groups are regularly alternatively arranged.

6. Saw blade of one of the claims 1 to 5, **characterized in that** at least one tooth (2*) of the second group is arranged between two teeth (2₁, 2₂, etc.) of the first group.

7. Saw blade of one of the claims 1 to 6, **characterized in that** wherein the phases (7) of all of the teeth (2) of the first group are located at the same phase angle (9) with respect to a line extending perpendicular to the longitudinal centre plane (8).

8. Saw blade of one of the claims 1 to 7, **characterized in that** at least the teeth (2*) of the second group have a greater width than the body (1) of the saw blade.

9. Saw blade of one of the claims 1 to 8, **characterized in that** the flanks (10*) of the teeth (2*) of the second group are arranged to have a flank angle (11) between about 3° and 12°, especially of about 8° between the cutting edge and the flank.

10. Saw blade of one of the claims 1 to 9, **characterized in that** the teeth (2, 2*) of both of the groups include a ground hard metal element.

11. Saw blade of one of the claims 1 to 10, **characterized in that** within the recurring cycle of the teeth (2, 2*) of both of the groups further groups of teeth are provided having a recurring, variable pitch.

12. Saw blade of claim 11, **characterized in that** the number of teeth in the additional group of teeth is not identical to the number of teeth in the first and second group.

## Revendications

1. Lame de scie comportant un corps de base (1) et des dents non avoyées, réalisées symétriquement par rapport à un plan médian longitudinal (8) du corps de base, avec des tranchants, qui sont prévues en cycles se renouvelant et chaque cycle comporte au moins un premier groupe de dents constitué d'au moins deux dents (2) avec des hauteurs et des largeurs échelonnées, et au moins un deuxième groupe de dents constitué d'au moins deux dents (2*), les dents (2) du premier groupe de dents comportant des tranchants ou tronçons de tranchants utiles, formé chacun par une arête de coupe (5₁, 5₂, etc.) se pliant, et les dents (2*) du deuxième groupe de dents étant réalisées identiques les unes aux autres et constituant les dents de largeur maximale et de hauteur minimale, **caractérisée en ce que** les dents (2*) du deuxième groupe de dents comportent d'une part des tranchants ou tronçons de tranchant utiles, formés chacun par une arête de coupe (5*, 5*, etc.) continue sur la largeur, et d'autre part forment un angle inférieur à 90° entre l'arête de coupe (5*) et le flanc (10*).

2. Lame de scie selon la revendication 1, **caractérisée en ce que** les tranchants ou tronçons de tranchant de toutes les dents (2, 2*) sont dimensionnés et adaptés les uns aux autres de manière que leurs parties utiles enlèvent un volume de copeaux à peu près égal dans le canal de coupe.

3. Lame de scie selon la revendication 1, **caractérisé en ce que** les tranchants ou tronçons de tranchant de toutes les dents (2, 2*) sont dimensionnés et adaptés les uns aux autres de manière que leurs parties utiles enlèvent des copeaux à peu près de même largeur du canal de coupe.

4. Lame de scie selon la revendication 1, **caractérisée en ce que** la lame de scie ne comporte que des dents (2, 2") non avoyées.

5. Lame de scie selon la revendication 1, **caractérisée en ce que** les dents (2, 2*) des groupes de dents au nombre de deux au moins dans le cycle sont disposées de préférence régulièrement imbriquées les unes dans les autres.

6. Lame de scie selon l'une des revendications 1 à 5, **caractérisée en ce qu'**entre deux dents (2₁, 2₂, etc.) du premier groupe de dents est introduite au moins une dent (2*) du deuxième groupe de dents.

7. Lame de scie selon l'une des revendications 1 à 6, **caractérisée en ce que** les biseaux (7) de toutes les dents (2) du premier groupe de dents sont disposés suivant un même angle de biseau (9) par rapport à une droite, perpendiculairement au plan médian longitudinal (8) du corps de base (1).

8. Lame de scie selon l'une des revendications 1 à 7, **caractérisée en ce qu'**au moins les dents (2*) du deuxième groupe de dents présentent une plus grande largeur que le corps de base (1).

9. Lame de scie selon l'une des revendications 1 à 8, **caractérisée en ce que** les flancs (10*) des dents (2*) du deuxième groupe de dents sont disposés suivant un angle de flanc (11) compris entre 3° et 12°, en particulier de 8°.

10. Lame de scie selon l'une des revendications 1 à 9, **caractérisée en ce que** les dents (2*) des deux groupes de dents sont réalisées en tant que dents affûtées pourvues d'un métal dur.

11. Lame de scie selon l'une des revendications 1 à 10, **caractérisée en ce que** dans le cycle se renouvelant des dents (2, 2*) des deux groupes de dents sont formés d'autres groupes de dents qui présentent des pas variables se renouvelant.

12. Lame de scie selon la revendication 11, **caractérisée en ce que** le nombre de dents dans l'autre groupe de dents, défini par la succession des pas variables, ne coïncide pas avec le nombre de dents des deux premiers groupes de dents.
